# EUROPÄISCHE PATENTSCHRIFT

(11) **EP 3 435 388 B1**
(45) Veröffentlichungstag und Bekanntmachung des Hinweises auf die Patenterteilung: **23.10.2019**
(21) Anmeldenummer: 18183931.7
(22) Anmeldetag: 17.07.2018
(51) Int. Cl.: H01F 29/02, G05F 1/14, H01F 27/02, H02J 3/18, E04H 5/04, H02M 5/12

(54) **ANORDNUNG ZUR REGULIERUNG VON SPANNUNGSÄNDERUNGEN IN EINEM MITTELSPANNUNGSSTROMNETZ**
ARRANGEMENT FOR THE REGULATION OF VOLTAGE CHANGES IN A MEDIUM-VOLTAGE CURRENT NETWORK
DISPOSITIF DE RÉGULATION DE CHANGEMENTS DE TENSION DANS UN RÉSEAU ÉLECTRIQUE MOYENNE TENSION

(30) Priorität: 17.07.2017 DE 102017116022
(43) Veröffentlichungstag der Anmeldung: 30.01.2019
(73) Patentinhaber: ABB Schweiz AG, 5400 Baden (CH)
(72) Erfinder: Cornelius, Frank, 59929 Brilon (DE); Soetebier, Sven, 59929 Brilon (DE)
(74) Vertreter: Marks, Frank

(56) Entgegenhaltungen:
- EP-A1- 2 219 277
- EP-B1- 2 942 796
- Frank Cornelius: "Spannungsregelung im Smart Grid MS-/ NS-Längsspannungsregler", , 27. Februar 2015 (2015-02-27), XP055529110, Gefunden im Internet: URL:https://docplayer.org/11820760-Frank-c ornelius-abb-ag-brilon-26-02-2015-spannung sregelung-im-smart-grid-ms-ns-laengsspannu ngsregler.html [gefunden am 2018-11-30]
- Abb: "Spannungsregler für das Mittelspannungsnetz mit RESIBLOC", , 1. Januar 2015 (2015-01-01), XP055528968, Gefunden im Internet: URL:https://new.abb.com/docs/librariesprov ider27/default-document-library/deabb-5153 -15-de-spannungslängsregler-für-das-mittel spannungsnetz-final.pdf?sfvrsn=2 [gefunden am 2018-11-30]
- Siemens Ag: "Medium-voltage in-phase regulator system", , 1. Januar 2015 (2015-01-01), XP055528976, Gefunden im Internet: URL:https://www.energy.siemens.com/br/pool /hq/power-transmission/Transformers/Distri bution%20Transformers/Voltage-Regulators/s iemens-transformers_medium-voltage-in-phas e-regulator-system_iPDF.pdf [gefunden am 2018-11-30]

## Beschreibung

Die Erfindung betrifft eine Anordnung zur Regulierung von Spannungsänderungen in einem Mittelspannungsstromnetz gemäß dem Oberbegriff von Anspruch 1.

Um Spannungsschwankungen in Zuleitungen von Mittelspannungsstromnetzen ausgleichen zu können, die beispielsweise dadurch entstehen, dass Verbraucher, wie beispielsweise Haushalte und Industrieanlagen, oder auch Energieerzeuger, wie beispielsweise Solarfarmen oder Windradparks, zu- oder abgeschaltet werden, bzw. die von diesen benötigte oder erzeugte Energie über den Tag verteilt stark schwankt, ist es bekannt, sogenannte Längsspannungsregler einzusetzen, die das Spannungsniveau auf den jeweiligen Phasen des Stromnetzes bei Bedarf erhöhen oder erniedrigen, um die Spannung innerhalb eines vorgegebenen Spannungskorridors zu halten.

Bei den bekannten Längsspannungsreglern sind hierzu ein Einspeisetransformator mit mehreren Abgriffen und ein Zusatztransformator über einen Zwischenkreis und einen Stufenschalter verbunden, welch letzterer durch eine Steuerungseinrichtung betätigt wird, wenn das Spannungsniveau erhöht oder erniedrigt werden muss. Der Zusatztransformator koppelt hierbei einen Teil der vom Einspeisetransformator erzeugten und von dessen Wicklungen abgegriffenen Spannung in die jeweilige Phase des Mittelspannungsstromnetzes ein, um wiederum deren Spannung zu erhöhen, bzw. zu erniedrigen.

Ein solcher Längsspannungsregler ist beispielsweise aus der EP 2 942 796 B1 bekannt.

Bei den bisher in der Praxis eingesetzten Längsspannungsreglern ergibt sich hierbei das Problem, dass die beiden Transformatoren luftgekühlt sind und zur Vermeidung von Funkenüberschlägen in einem entsprechenden Abstand zueinander innerhalb eines Transformatorengebäudes untergebracht werden müssen, wohingegen die elektronischen Steuerungseinrichtungen zum Ansteuern der Stufenschalter, die in der Regel lediglich mit Niederspannung betrieben werden, in einem separaten getrennten Gebäudeteil des Transformatorengebäudes aufgenommen sind. Durch diese beabstandete Anordnung der Transformatoren sowie auch der elektronischen Steuerungseinrichtungen ergibt sich bei den in der Praxis eingesetzten Längsspannungsreglern ein großer Platzbedarf, der auch dadurch bedingt ist, dass für die Kühlung der Transformatoren entsprechend große Lüftungsöffnungen in der Außenwand des in der Regel geschlossenen Transformatorengehäuses bereitgestellt werden müssen.

Demgemäß ist es eine Aufgabe der vorliegenden Erfindung, eine Anordnung zur Regulierung von Spannungsänderungen in einem Mittelspannungsstromnetz zu schaffen, welche eine kompakte räumliche Bauform sowie einen erhöhten elektrischen Wirkungsgrad besitzt.

Diese Aufgabe wird erfindungsgemäß durch eine Anordnung mit den Merkmalen von Anspruch 1 gelöst.

Gemäß der Erfindung umfasst eine Anordnung zur Regulierung von Spannungsänderungen in einem Mittelspannungsstromnetz einen Einspeisetransformator, der eine elektrisch mit einer Phase des Mittelspannungsstromnetzes koppelbare Primärspule und eine Sekundärspule mit wenigstens zwei sekundärspulenseitigen Abgriffen besitzt. Die Anordnung umfasst weiterhin einen Zusatztransformator, der eine mit der wenigstens einen Phase in Reihe geschaltete Sekundärspule sowie eine Primärspule aufweist, welch letztere über einen Zwischenkreis sowie einen Stufenschalter zur Einkopplung einer vom Einspeisetransformator bereitgestellten Zusatzspannung in die Phase wechselweise mit den wenigstens zwei sekundärseitigen Abgriffen verbindbar ist. Der Stufenschalter ist durch eine Steuerungseinrichtung zur Betätigung des Stufenschalters ansteuerbar. Die Anordnung umfasst weiterhin einen Aufnahmeraum, in welchem der Einspeisetransformator, der Zusatztransformator sowie der Stufenschalter und die Steuerungseinrichtung aufgenommen sind. Die Anordnung zeichnet sich dadurch aus, dass zumindest die Primär- und Sekundärspule des Einspeisetransformators, die Primär- und Sekundärspule des Zusatztransformators sowie auch der Stufenschalter in einem ersten Raumbereich des Aufnahmeraums in einem Öltransformatorenkessel aufgenommen sind, und dass die Steuerungseinrichtung in einem vom ersten Raumbereich durch eine Trennwand getrennten zweiten Raumbereich des Aufnahmeraums angeordnet ist. Bei dem Öltransformatorenkessel handelt es sich um einen vorzugsweise quaderförmigen, flüssigkeitsdichten Kessel oder Tank, der mit einem bekannten Transformatorenöl für Hochspannungstransformatoren gefüllt ist, in welchem die Spulen des Einspeisetransformators und Zusatztransformators sowie gegebenenfalls auch weitere Bauteile der Transformatoren, bevorzugt die sogenannten Aktivbauteile der Transformatoren, aufgenommen sind.

Durch die Erfindung ergibt sich der Vorteil, dass die Spulen, von denen jeder Transformator bevorzugt insgesamt drei Spulen für jede der drei Phasen des Mittelspannungsstromnetzes enthält, aufgrund der isolierenden Wirkung des Transformatorenöls in einem solch dichten Abstand zueinander angeordnet werden können, dass sich die Grundfläche des Aufnahmeraums insgesamt um ca. 40 % verkleinern lässt.

Obgleich der Einspeisetransformator und der Zusatztransformator auch jeweils in einem eigenen Öltransformatorenkessel angeordnet sein können, der vom jeweils anderen Öltransformatorenkessel räumlich getrennt ist, sind diese bei der bevorzugten Ausführungsform der Erfindung in einem gemeinsamen Öltransformatorenkessel angeordnet, wodurch sich der Vorteil ergibt, dass die Anzahl an Rohrleitungen und Sensoren, mit denen das Transformatorenöl zugeführt wird, bzw. dessen Temperatur und Beschaffenheit kontrolliert wird, verringert ist.

Nach einem weiteren der Erfindung zugrunde liegenden Gedanken ist der Stufenschalter auf dem Einspeisetransformator angeordnet, wodurch sich der Vorteil ergibt, dass die elektrischen Leitungen von den Abgriffen der Sekundärspule, bzw. Sekundärspulen bei mehreren Phasen, zum Stufenschalter sehr kurz gehalten werden können, sodass der Vorrichtungsaufwand zum Isolieren der die Hochspannung führenden Leitungen, und damit die Kosten, reduziert werden kann.

Der Stufenschalter ist vorzugsweise ein bekannter gasisolierter Stufenschalter, der unmittelbar oberhalb des Einspeisetransformators positioniert wird und beispielsweise am Gehäuse des Öltransformatorenkessels befestigt sein kann. Durch den Einsatz eines gasisolierten Stufenschalters und die Anordnung desselben auf der Oberseite des Öltransformatorenkessels ergibt sich der Vorteil, dass nicht nur die von der erfindungsgemäßen Anordnung eingenommene Grundfläche, sondern zusätzlich auch die Höhe und damit der räumliche Platzbedarf der Anordnung gegenüber herkömmlichen bekannten Stufenschaltern verringert werden können. Zudem ist die Anordnung dadurch flexibel auf unterschiedliche Leistungen der Transformatoren bzw. Stufenschalter skalierbar.

Nach einem weiteren der Erfindung zugrunde liegenden Gedanken hat der Aufnahmeraum die Form eines Quaders, der eine Grundfläche besitzt, deren Längsseite eine größere Länge aufweist als die Querseite. Der zweite Raumbereich erstreckt sich bei dieser Ausführungsform der Erfindung über die Querseite des Quaders hinweg und wird durch ein Verschlusselement, bevorzugt eine Tür oder eine Klappe, verschlossen, welche ausschließlich von außen her geöffnet werden kann. Hierdurch ergibt sich der Vorteil, dass im Inneren des Aufnahmeraums kein Zugangsbereich zum Zugang zur Steuerungseinrichtung bereitgestellt werden muss, was in vorteilhafter Weise zur weiteren Reduzierung der Grundfläche führt. Demnach ist die Steuerungseinrichtung, die die entsprechende Elektronik und Rechner zum Ansteuern des Stufenschalters sowie zur Erfassung der elektrischen Größen des Mittelspannungsstromnetzes enthält und die durch die Trennwand zuverlässig vom ersten Raumbereich isoliert wird, in welchem die Transformatoren angeordnet sind, die mit einer Spannung von mehreren KV betrieben werden, von einer Bedienperson von außen her ohne Einschränkungen zugänglich

Eine besonders kompakte räumliche Anordnung ergibt sich bei der zuletzt beschriebenen quaderförmige Ausführungsform dadurch, dass die Primär- und Sekundärspulen des Einspeisetransformators für jede der drei Phasen des Mittelspannungsstromnetzes in einer ersten Reihe und die Primär- und Sekundärspulen des Zusatztransformators für eine jede der drei Phasen des Stromnetzes in einer parallel zur ersten Reihe verlaufenden zweiten Reihen innerhalb des ersten Raumbereichs angeordnet sind, wobei sich die beiden Reihen zwischen der Trennwand und der der Trennwand gegenüberliegenden Querseite des Aufnahmeraums parallel zu den Längsseiten erstrecken. Dies ermöglicht eine räumlich besonders kompakte Bauform, bei der in vorteilhafter Weise auch ein guter Zugang zu den Transformatoren im ersten Raumbereich, zum Beispiel über seitliche Türen oder Klappen und gleichzeitig eine bestmögliche Trennung zwischen den Hochspannung führenden Teilen der Transformatoren und dem Stufenschalter im ersten Raumbereich sowie der Steuerungseinrichtung im zweiten Raumbereich ergibt.

Bei der bevorzugten Ausführungsform der Erfindung ist der Aufnahmeraum in vorteilhafter Weise als eine transportable Einheit, beispielsweise als ein Container, ausgeführt, dessen Seitenwände aus Metall oder auch zum Teil aus tragenden BetonFertigteilen zusammengesetzt sein können, und dessen Grundfläche bevorzugt eine Länge von 3,8 m und eine Breite von 2,4 m besitzt. Hierbei stellt es einen besonderen Vorteil der erfindungsgemäßen Anordnung dar, dass lediglich die Grundplatte, die Trennwand, die der Trennwand gegenüberliegende Stirnwand, welche den ersten Raumbereich an der Querseite nach außen abgrenzt, sowie auch die den zweiten Raumbereich seitlich begrenzenden Wandelemente, die beispielsweise eine Länge von 0,42 m besitzen, als tragende Elemente ausgebildet sein müssen, um einen selbsttragenden, mobil transportierbaren Aufnahmeraum zu erhalten. Die an den Längsseiten des ersten Raumabschnitts angeordneten Verschlusselemente sowie auch die Verschlusselemente zum Verschließen des zweiten Raumbereichs können hingegen als einfache nicht tragende Blechtüren oder Gitter ausgestaltet sein, wodurch sich das Gesamtgewicht der mobil transportablen Einheit in vorteilhafter Weise weiter reduziert.

Die Erfindung wird nachfolgend mit Bezug auf die Zeichnungen anhand einer bevorzugten Ausführungsform beschrieben. In den Zeichnungen zeigen
- Fig. 1: eine schematische Aufsicht auf eine bevorzugte Ausführungsform der erfindungsgemäßen Anordnung und
- Fig. 2: eine schematische Darstellung eines Schaltplans mit angedeuteten weiteren Komponenten der erfindungsgemäßen Anordnung.

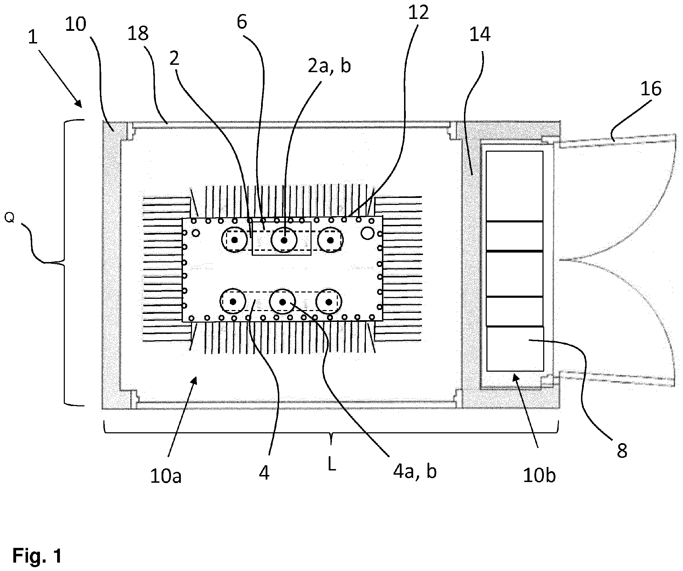

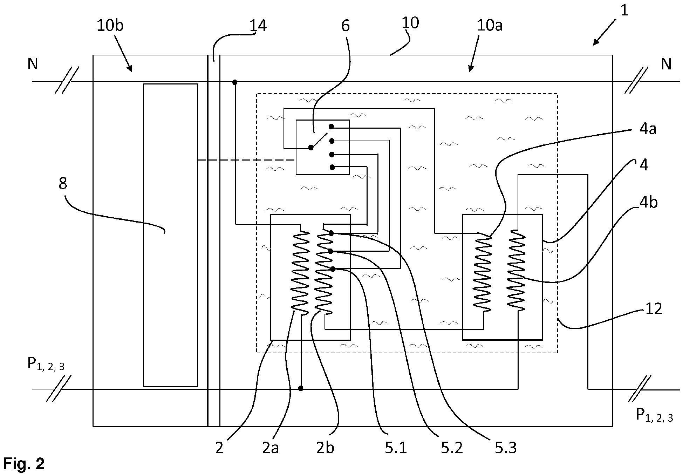

Wie in Fig. 1 gezeigt ist, umfasst eine erfindungsgemäße Anordnung 1 zur Regulierung von Spannungsänderungen in einem Mittelspannungsstromnetz, welches beispielsweise einen mit N bezeichneten Nullleiter sowie wenigstens einen mit P_{1, 2, 3} bezeichnete Phase aufweist, einen Aufnahmeraum 10, beispielsweise ein Transformatorenhäuschen, welches einen ersten Raumbereich 10a sowie einen zweiten Raumbereich 10b besitzt. Im ersten Raumbereich 10a befindet sich ein Einspeisetransformator 2, der eine elektrisch mit einer Phase P_{1, 2, 3} des Mittelspannungsstromnetzes koppelbare Primärspule 2a und eine Sekundärspule 2b mit wenigstens zwei sekundärspulenseitigen Abgriffen 5.1, 5.2, 5.3 aufweist, die mit einem elektrischen Stufenschalter, insbesondere einem gasisolierten Stufenschalter 6, verbunden sind. Im ersten Raumbereich 10a des Aufnahmeraums 10 befindet sich weiterhin ein zweiter Zusatztransformator 4, der eine mit der wenigstens einen Phase P_{1, 2, 3} in Reihe geschaltete Sekundärspule 4a sowie eine Primärspule 4b besitzt, welch letztere über den Stufenschalter 6 wechselweise mit den jeweiligen Abgriffen 5.1, 5.2, 5.3 der Sekundärspule 2b des Einspeisetransformators 2 verbindbar ist, um zur Erhöhung oder Verringerung der jeweiligen Spannung der Phase P_{1, 2, 3} des Mittelspannungsstromnetzes eine Zusatzspannung in diese einzukoppeln, welche sich mit der jeweiligen Spannung der Phase P_{1, 2, 3} je nach Vorzeichen zu einer entsprechend erhöhten oder verringerten neuen Gesamtspannung der Phase P_{1, 2, 3} überlagert. Hierzu kann es vorgesehen sein, dass der Eingang und der Ausgang der Primärspule 4a des Zusatztransformators 4 über nicht näher gezeigte weitere Schalter und elektrische Widerstände bei Bedarf gegeneinander vertauscht werden können, sodass anstelle einer positiv eingekoppelten Zusatzspannung eine negative Zusatzspannung eingekoppelt wird, die die Spannung der Phase P_{1, 2, 3} entsprechend verringert, wenn beispielsweise aufgrund einer hohen Sonneneinstrahlung und hohen Windgeschwindigkeit ein Überschuss an Solar- und Windenergie in das Mittelspannungsstromnetz eingespeist wird. Anders ausgedrückt sind die Anschlüsse der Primärspule 4a des Zusatztransformators 4 bevorzugter Weise zur Umkehrung der Stromrichtung in der Primärspule 4 über elektrische Schalter und ggf. ohmsche Lastwiderstände in umgekehrter Richtung mit dem Stufenschalter 6 und dem zweiten Anschluss der Sekundärspule 2a des Einspeisetransformators 2 verbindbar.
Die Schalter sowie gegebenenfalls für den Umschaltvorgang des Stufenschalters 6 benötigte Widerstände sind in der Schemadarstellung der Schaltungskomponenten in Fig. 2 aus darstellungstechnischen Gründen nicht mit eingezeichnet.

Wie der Darstellung der Fig. 1 und 2 weiterhin entnommen werden kann, wird der Stufenschalter 6 durch eine vorzugsweise elektronische Steuerungseinrichtung 8 angesteuert, welche sich in dem zweiten Raumbereich 10b befindet, der vom ersten Raumbereich 10a durch eine Trennwand 14 getrennt ist.

Wie in der Darstellung der Fig. 2 durch die gestrichelten Linien sowie die darin enthaltenen Wellenlinien angedeutet ist, sind der Einspeisetransformator 2 und der Zusatztransformator 4 mit ihren jeweiligen Spulen sowie bevorzugt auch der Stufenschalter 6 in einem Öltransformatorenkessel 12 angeordnet, der z.B. aus Stahlblech besteht und mit einem bekannten elektrisch isolierenden Transformatorenöl gefüllt ist. Die Kühlung des Transformatorenöls im Öltransformatorenkessel 12 erfolgt bevorzugt über Konvektion, wozu die Außenwand des Kessels 12 mit einer Vielzahl von Kühlrippen versehen sein kann, wie dies in Fig. 1 angedeutet ist. Wie sich aus der Aufsicht auf die erfindungsgemäße Anordnung in Fig. 1 ersehen lässt, sind die auf einen Spulenkern gewickelten Primärspulen und Sekundärspulen 2a, 2b für eine jeweilige der drei Phasen P_{1, 2, 3} des Stromnetzes entlang einer ersten Reihe angeordnet; und die Primär- und Sekundärspulen 4a, 4b des Zusatztransformators 4 sind in einer zweiten Reihe positioniert, die sich parallel zur ersten Reihe erstreckt.

Wie der Darstellung der Fig. 1 hierbei weiterhin entnommen werden kann, besitzt der Aufnahmeraum 10 bei der bevorzugten Ausführungsform eine quaderförmige Gestalt mit einer Grundfläche, deren Längsseite L eine größere Länge als deren Querseite Q aufweist. Die Längsseite L kann beispielsweise eine Länge von 3,8 m besitzen, wohingegen die Querseite Q lediglich eine Länge von 2,4 m besitzt. Die Höhe kann z.B. 2,5m bis 3,5 m oder auch mehr betragen. Diese vorteilhafte, räumlich deutlich kompaktere Ausgestaltung und Anordnung der Transformatoren 2, 4 führt gegenüber den in der Praxis eingesetzten bekannten Anordnungen, bei denen zwei gegenüber der erfindungsgemäßen Anordnung von Fig. 1 um 90° gedreht verlaufende Reihen von luftisolierten Transformatorenspulen eingesetzt werden, zu einer Reduzierung der Grundfläche der erfindungsgemäßen Anordnung von 15 qm auf lediglich 9,12 qm, was einer Flächeneinsparung von ca. 40 % entspricht.

Wie der Darstellung der Fig. 1 weiterhin entnommen werden kann, befindet sich die Steuerungseinrichtung 8 ausschließlich im zweiten Raumbereich 10b, der durch die Trennwand 14 sowie mit dieser verbundene, nicht näher bezeichnete seitliche Schenkel umschlossen wird. Der Zugang zu diesem elektrisch und auch thermisch vom ersten Raumbereich 10a isolierten zweiten Raumbereich 10b erfolgt hierbei erfindungsgemäß über eine oder auch zwei Türen oder Klappen 16, die nach außen hin aufschwenkbar sind, sodass die gesamte Steuerungseinrichtung 8, die bevorzugt in einem Schaltschrank angeordnet ist, von außen her bedient werden kann. Die sich entlang der beiden Längsseiten L der erfindungsgemäßen Anordnung 1 erstreckenden Verschlusselemente 18 können beispielsweise als Bleche oder Lüftungsgitter ausgestaltet sein, die über eine entsprechende Verschraubung oder sonstige Befestigungselemente lösbar an den entsprechenden Trägerelementen befestigt sind, um diese zur Wartung der Transformatoren 2, 4 sowie des Stufenschalters 6 nach außen hin entfernen zu können.

### Bezuaszeichenliste

- 1: erfindungsgemäße Anordnung
- 2: Einspeisetransformator
- 2a: Primärspule
- 2b: Sekundärspule
- 4: Zusatztransformator
- 4a: Sekundärspule
- 4b: Primärspule
- 5.1 - 5.3: Abgriff
- 6: Stufenschalter
- 8: Steuerungseinrichtung
- 10: Aufnahmeraum
- 10a: erster Raumbereich
- 10b: zweiter Raumbereich
- 12: Öltransformatorenkessel
- 14: Trennwand
- 16: Zugangstür/Klappe zum zweiten Raumbereich
- 18: Verschlusselemente für den ersten Raumbereich
- P_{1, 2, 3}: Phase des Stromnetzes
- N: Nullleiter
- L: Längsseite des Aufnahmeraums
- Q: Querseite des Aufnahmeraums

## Patentansprüche

1. Anordnung (1) zur Regulierung von Spannungsänderungen in einem Mittelspannungsstromnetz umfassend einen Einspeisetransformator (2), der eine elektrisch mit einer Phase des Mittelspannungsstromnetzes koppelbare Primärspule (2a) und eine Sekundärspule (2b) mit wenigstens zwei sekundärspulenseitigen Abgriffen (5.1, 5.2, 5.3) besitzt, einen Zusatztransformator (4), der eine mit der wenigstens einen Phase (P_{1, 2, 3}) in Reihe geschaltete Sekundärspule (4a) sowie eine Primärspule (4b) besitzt, welch letztere über einen Stufenschalter (6) zur Einkopplung einer vom Einspeisetransformator (2) bereitgestellten Zusatzspannung in die Phase (P_{1, 2, 3}) wechselweise mit den wenigstens zwei sekundärseitigen Abgriffen (5.1, 5.2, 5.3) verbindbar ist, eine Steuerungseinrichtung (8) zur Betätigung des Stufenschalters (6) sowie eines Aufnahmeraums (10), in welchem der Einspeisetransformator (2), der Zusatztransformator (4) sowie der Stufenschaltern (6) und die Steuerungseinrichtung (8) aufgenommen sind,
**dadurch gekennzeichnet, dass**
die Primär- und Sekundärspule (2a, 2b) des Einspeisetransformators (2), die Primär- und Sekundärspule (4a, 4b) des Zusatztransformators (4) sowie der Stufenschalter (6) in einem ersten Raumbereich (10a) des Aufnahmeraums (10) in einem Öltransformatorenkessel (12) aufgenommen sind, und dass die Steuerungseinrichtung (8) in einem vom ersten Raumbereich (10a) durch eine Trennwand (14) getrennten zweiten Raumbereich (10b) des Aufnahmeraums (10) angeordnet ist.

2. Anordnung (1) nach Anspruch 1,
**dadurch gekennzeichnet, dass**
der Einspeisetransformator (2) und der Zusatztransformator (4) jeweils in einem eigenen Öltransformatorenkessel (12) angeordnet sind, der vom jeweils anderen Öltransformatorenkessel räumlich getrennt ist.

3. Anordnung (1) nach Anspruch 1,
**dadurch gekennzeichnet, dass**
der Einspeisetransformator (2) und der Zusatztransformator (4) zusammen in einem gemeinsamen Öltransformatorenkessel (12) angeordnet sind.

4. Anordnung (1) nach einem der vorhergehenden Ansprüche,
**dadurch gekennzeichnet, dass**
der Stufenschalter (6) oberhalb des Öltransformatorenkessels (12), bevorzugt auf dem Einspeisetransformator (2), angeordnet ist.

5. Anordnung (1) nach einem der vorhergehenden Ansprüche,
**dadurch gekennzeichnet, dass**
der Aufnahmeraum (10) die Form eines Quaders mit einer Grundfläche besitzt, deren Längsseite (L) eine größere Länge als deren Querseite (Q) aufweist, und dass der zweite Raumbereich (10b) sich über die Querseite des Quaders hinweg erstreckt und über ein Verschlusselement, bevorzugt eine Tür oder eine Klappe (16), ausschließlich von außen her zugänglich ist.

6. Anordnung (1) nach Anspruch 5,
**dadurch gekennzeichnet, dass**
der Einspeisetransformator (2) und der Zusatztransformator (4) jeweils eine der Anzahl der Phasen (P_{1, 2, 3}) des Mittelspannungsstromnetzes entsprechende Anzahl von Primär- und Sekundärspulen (2a, 2b, 4a, 4b) besitzen, die stehend entlang von zwei parallel zueinander verlaufenden Reihen angeordnet sind, welche sich im ersten Raumbereich (10a) von der Trennwand (14) aus zu der der Trennwand (14) gegenüberliegenden Querseite (Q) des Aufnahmeraums (10) erstrecken.

7. Anordnung (1) nach einem der vorhergehenden Ansprüche,
**dadurch gekennzeichnet, dass**
der Aufnahmeraum (10) als transportable Einheit, vorzugsweise als Container ausgeführt ist, in welchem die Transformatoren (2, 4), der Stufenschalter (6) und die Steuerungseinrichtung (8) aufgenommen sind.

8. Anordnung (1) nach einem der vorhergehenden Ansprüche,
**dadurch gekennzeichnet, dass**
der Stufenschalter (6) ein gasisolierter Stufenschalter ist.

9. Anordnung (1) nach einem der vorhergehenden Ansprüche,
**dadurch gekennzeichnet, dass**
die Anschlüsse der Primärspule (4a) des Zusatztransformators (4) zur Umkehrung der Stromrichtung in der Primärspule (4) über elektrische Schalter in umgekehrter Richtung mit dem Stufenschalter (6) verbindbar sind.

## Claims

1. Arrangement (1) for regulating voltage changes in a medium-voltage power supply system comprising an input transformer (2), which has a primary coil (2a), which is able to be electrically coupled to a phase of the medium-voltage power supply system, and a secondary coil (2b) having at least two secondary-coil-side taps (5.1, 5.2, 5.3), an additional transformer (4), which has a secondary coil (4a), which is connected in series with the at least one phase (P_{1, 2, 3}), and a primary coil (4b), which is able to be connected alternately to the at least two secondary-side taps (5.1, 5.2, 5.3) by means of a tap changer (6) for coupling an additional voltage provided by the input transformer (2) into the phase (P_{1, 2, 3}), a control device (8) for actuating the tap changer (6) and also a holding space (10), in which the input transformer (2), the additional transformer (4) and also the tap changer (6) and the control device (8) are held,
**characterized in that**
the primary and secondary coil (2a, 2b) of the input transformer (2), the primary and secondary coil (4a, 4b) of the additional transformer (4) and the tap changer (6) are held in a first spatial area (10a) of the holding space (10) in an oil transformer tank (12), and **in that** the control device (8) is arranged in a second spatial area (10b) of the holding space (10), said second spatial area being separated from the first spatial area (10a) by way of a partition wall (14).

2. Arrangement (1) according to Claim 1,
**characterized in that**
the input transformer (2) and the additional transformer (4) are each arranged in a separate oil transformer tank (12), which is physically separated from the respective other oil transformer tank.

3. Arrangement (1) according to Claim 1,
**characterized in that**
the input transformer (2) and the additional transformer (4) are arranged together in a common oil transformer tank (12).

4. Arrangement (1) according to one of the preceding claims,
**characterized in that**
the tap changer (6) is arranged above the oil transformer tank (12), preferably on the input transformer (2).

5. Arrangement (1) according to one of the preceding claims,
**characterized in that**
the holding space (10) has the shape of a cuboid with a base surface whose longitudinal side (L) has a greater length than the transverse side (Q) thereof, and **in that** the second spatial area (10b) extends beyond the transverse side of the cuboid and is accessible exclusively from the outside by means of a closure element, preferably a door or a hatch (16).

6. Arrangement (1) according to Claim 5,
**characterized in that**
the input transformer (2) and the additional transformer (4) each have a number of primary and secondary coils (2a, 2b, 4a, 4b) that corresponds to the number of phases (P_{1, 2, 3}) of the medium-voltage power supply system, said primary and secondary coils being arranged vertically along two rows that run parallel to one another and extend in the first spatial area (10a) from the partition wall (14) to the transverse side (Q) of the holding space (10) opposite the partition wall (14).

7. Arrangement (1) according to one of the preceding claims,
**characterized in that**
the holding space (10) is embodied as a transportable unit, preferably as a container, in which the transformers (2, 4), the tap changer (6) and the control device (8) are held.

8. Arrangement (1) according to one of the preceding claims,
**characterized in that**
the tap changer (6) is a gas-insulated tap changer.

9. Arrangement (1) according to one of the preceding claims,
**characterized in that**
the terminals of the primary coil (4a) of the additional transformer (4) are able to be connected to the tap changer (6) via electrical switches in the reverse direction in order to reverse the current direction in the primary coil (4).

## Revendications

1. Dispositif (1) de régulation de changements de tension dans un réseau électrique moyenne tension, comprenant un transformateur réseau (2), lequel possède un bobinage primaire (2a) pouvant être relié électriquement à une phase d'un réseau électrique moyenne tension et un bobinage secondaire (2b) doté d'au moins deux prises (5.1, 5.2, 5.3) du côté du bobinage secondaire, un transformateur auxiliaire (4), lequel possède un bobinage secondaire (4a) commuté en série avec l'au moins une phase (P1, 2, 3) ainsi qu'un bobinage primaire (4b), lequel peut être raccordé en dernier alternativement avec les au moins deux prises (5.1, 5.2, 5.3) du côté secondaire par le biais d'un commutateur à plots (6) pour accoupler une tension auxiliaire générée par le transformateur réseau (2) dans la phase (P1, 2, 3), un moyen de commande (8) pour actionner le commutateur à plots (6) ainsi qu'un espace de logement (10), à l'intérieur duquel sont logés le transformateur réseau (2), le transformateur auxiliaire (4) ainsi que le commutateur à plots (6) et le moyen de commande (8),
**caractérisé en ce que** les bobinages primaire et secondaire (2a, 2b) du transformateur réseau (2), les bobinages primaire et secondaire (4a, 4b) du transformateur auxiliaire (4) ainsi que le commutateur à plots (6) sont logés dans une première zone (10a) de l'espace de logement (10) dans un réservoir de transformateur à huile (12), et **en ce que** le moyen de commande (8) est agencé dans une deuxième zone (10b) de l'espace de logement (10) séparée de la première zone (10a) par une paroi de séparation (14).

2. Dispositif (1) selon la revendication 1, **caractérisé en ce que** le transformateur réseau (2) et le transformateur auxiliaire (4) sont agencés respectivement dans leur propre réservoir de transformateur à huile (12), chacun des réservoirs de transformateur à huile étant respectivement séparé de l'autre.

3. Dispositif (1) selon la revendication 1, **caractérisé en ce que** le transformateur réseau (2) et le transformateur auxiliaire (4) sont agencés dans un même réservoir de transformateur à huile (12) commun.

4. Dispositif (1) selon l'une des revendications précédentes, **caractérisé en ce que** le commutateur à plots (6) est agencé au-dessus du réservoir de transformateur à huile (12), de préférence sur le transformateur réseau (2).

5. Dispositif (1) selon l'une des revendications précédentes, **caractérisé en ce que** l'espace de logement (10) possède la forme d'une pierre de taille avec une surface de base, dont le côté longitudinal (L) est plus long que le côté transversal (Q), et **en ce que** la deuxième zone (10b) s'étend au-dessus du côté transversal de la pierre de taille et est accessible exclusivement de l'extérieur par le biais d'un élément de fermeture, en particulier une porte ou une trappe (16).

6. Dispositif (1) selon la revendication 5, **caractérisé en ce que** le transformateur réseau (2) et le transformateur auxiliaire (4) possèdent respectivement un nombre de phases de bobinages primaires et secondaires (2a, 2b, 4a, 4b) correspondant respectivement au nombre de phases (P1, 2, 3) du réseau électrique moyenne tension, lesquelles sont agencées debout le long de deux lignes parallèles l'une à l'autre, lesquelles s'étendant dans la première zone (10a) depuis la paroi de séparation (14) jusqu'au côté transversal (Q) opposé à la paroi de séparation (14) de l'espace de logement (10).

7. Dispositif (1) selon l'une des revendications précédentes, **caractérisé en ce que** l'espace de logement (10) est réalisé comme unité transportable, de préférence comme conteneur, à l'intérieur duquel sont logés les transformateurs (2, 4), le commutateur à plots (6) et le moyen de commande (8).

8. Dispositif (1) selon l'une des revendications précédentes, **caractérisé en ce que** le commutateur à plots (6) est un commutateur à plots à isolation gazeuse.

9. Dispositif (1) selon l'une des revendications précédentes, **caractérisé en ce que**, pour inverser le sens du courant dans le bobinage primaire (4), les branchements du bobinage primaire (4a) du transformateur auxiliaire (4) sont raccordables au commutateur à plots (6) par le biais d'un commutateur dans la direction inverse.
